# EUROPÄISCHE PATENTANMELDUNG

(11) **EP 2 281 675 A2**
(43) Veröffentlichungstag der Anmeldung: **09.02.2011**
(21) Anmeldenummer: 10007374.1
(22) Anmeldetag: 16.07.2010
(51) Int. Cl.: B29C 45/40, B29C 45/50, B29C 45/68, B30B 1/18, B30B 1/34

(54) **Antriebsvorrichtung**

(30) Priorität: 06.08.2009 DE 102009036350
(71) Anmelder: Robert Bosch GmbH, 70469 Stuttgart (DE)
(72) Erfinder: Fröhlich, Udo, 97851 Rothenfels (DE)
(74) Vertreter: Thürer, Andreas

(57) **Zusammenfassung**

Offenbart ist die Antriebsvorrichtung mit einem an einer Spindelaufnahme abgestützten Spindeltrieb zur Verstellung eines Arbeitselements. Das Arbeitselement ist beispielsweise eine Schließeinheit für ein Werkzeug wie eine Zweiplattenspritzgießmaschine. Die Spindelaufnahme ist ihrerseits dabei an einem Kraftübersetzer abgestützt, der zwei Hydraulikzylinder aufweist. Über eine Kolbenstange des einen Hydraulikzylinders ist die Spindelaufnahme gegen einen Anschlag vorspannbar, wobei bei einer auf das Arbeitselement entgegen einer Vorspannkraft wirkenden Widerstandskraft, die größer als die Vorspannkraft ist, die Spindelaufnahme gegen die Vorspannkraft bewegbar ist. Bei dieser Bewegung entsteht eine Kraft, die von der Spindelaufnahme über den Kraftübersetzer mit einer entsprechend dem Übersetzungsverhältnis größeren Kraft auf das Arbeitselement beaufschlagt wird.

## Beschreibung

Die Erfindung betrifft eine Antriebsvorrichtung, insbesondere für ein bewegbares Bauteil an einer Kunststoffspritzgieß- oder einer Blasformmaschine, gemäß dem Oberbegriff des Patentanspruchs 1.

In jüngster Zeit geht man dazu über, Spritzgießmaschinen mit elektrischen und hydraulischen Antrieben zu versehen, wobei über den elektrischen Antrieb Stellbewegungen mit hoher Geschwindigkeit bei vergleichsweise geringen Kräften durchgeführt werden, während der hydraulische Antrieb besonders vorteilhaft ist, wenn hohe Axialkräfte bei vergleichsweise geringfügigen Stellbewegungen aufgebracht werden müssen.

Derartige Anforderungen treten beispielsweise bei einer Schließeinheit oder einer Einspritzeinheit oder beim Betätigen von Auswerfern einer Kunststoffspritzgießmaschine auf. Beispielsweise wird zum Einspritzen von Kunststoff in eine Werkzeugkavität eine Plastifizierschnecke mit relativ hoher Axialgeschwindigkeit in Richtung auf die Form bewegt bis die Form vollständig mit Kunststoff gefüllt ist. Während der sich anschließenden Nachdruckphase, in der der Formteilschwund durch Zuführen von Formmasse ausgeglichen wird, muss über die Einspritzeinheit eine hohe Kraft ohne wesentlichen Axialvorschub der Plastifizierschnecke aufgebracht werden.

Ähnlich sind die Anforderungen bei einer Schließeinheit zum Schließen des Werkzeuges einer Spritzgießmaschine, wobei die bewegliche Aufspannplatte zum Schließen des Werkzeuges zunächst über den elektrischen Antrieb schnell bewegt wird und dann zum vollständigen Zufahren und Zuhalten des Werkzeuges mit der erforderlichen Schließkraft nur ein kurzer Resthub durchfahren werden muss.

In der DE 103 54 955 ist eine derartige Antriebsvorrichtung offenbart. Diese hat eine drehbar in einem Maschinengestell angeordnete Spindel, die über eine Spindelmutter eine Schließeinheit betätigt. Die Schließeinheit wird mittelbar mit hoher Kraft oder unmittelbar mit hoher Geschwindigkeit über die Spindelmutter verfahren. Zum mittelbaren Verfahren bewegt die Spindel über die Spindelmutter einen Kolben eines ersten Zylinders, womit Druckmittel aus einem Zylinderraum des ersten Zylinders verdrängt und in einen Zylinderraum eines zweiten Zylinders gefördert wird, wodurch ein den zweiten Zylinderraum begrenzender Kolben betätigt ist. Die Wirkfläche des ersten Kolbens ist kleiner als die Wirkfläche des zweiten Kolbens, wodurch eine Kraftübersetzung erfolgt. Der zweite Kolben ist mit der Schließeinheit verbunden und beaufschlagt diese mit der entsprechend kraftübersetzten Kraft. Zum unmittelbaren Verfahren der Schließeinheit wird diese direkt über die Spindelmutter der Spindel angetrieben.

Diese Lösung hat den Nachteil, dass die Antriebsvorrichtung äußerst aufwendig und kostenintensiv aufgebaut ist.

Dem gegenüber liegt der Erfindung die Aufgabe zugrunde eine Antriebsvorrichtung zu schaffen, die einfach aufgebaut und kostengünstig konstruierbar ist.

Diese Aufgabe wird gelöst durch eine Antriebsvorrichtung gemäß den Merkmalen des Patentanspruch 1.

Erfindungsgemäß weist eine Antriebsvorrichtung einen an einer Spindelaufnahme abgestützten Spindeltrieb auf, der zur Verstellung eines Arbeitselements, insbesondere eines bewegbaren Bauteils an einer Kunststoffspritzgieß- oder einer Blasformmaschine, dient. Die Spindelaufnahme ist ihrerseits an einem Kraftübersetzter abgestützt und ist von diesem mit einer Vorspannkraft gegen einen Anschlag vorspannbar. Bei einer auf das Arbeitselement entgegen der Vorspannkraft wirkenden Widerstandskraft, die größer als die Vorspannkraft ist, ist die Spindelaufnahme gegen die Vorspannkraft bewegbar. Die bei dieser Bewegung entstehende Kraft wird von der Spindelaufnahme über den Kraftübersetzter mit einer entsprechend dem Übersetzungsverhältnis größeren Kraft auf das Arbeitselement beaufschlagt.

Diese Lösung hat den Vorteil, dass mit geringem vorrichtungstechnischem Aufwand eine Antriebsvorrichtung mit einem Eil- und einem Arbeitsgang geschaffen ist.

Vorzugsweise weist der Kraftübersetzter einen hydraulischen Betätigungs- und Arbeitszylinder auf, die äußerst robust und einfach aufgebaut sein können.

In weiterer Ausgestaltung der Erfindung begrenzt ein im Betätigungszylinder geführter und mit der Spindelaufnahme verbundener Betätigungskolben einen Betätigungszylinderraum, der in Druckmittelverbindung mit einem Arbeitszylinderraum des Arbeitszylinders steht. Der Arbeitszylinderraum ist von einem im Arbeitzylinder geführten und mit dem Arbeitselement verbundenen Arbeitskolben begrenzt. Der Betätigungs- und Arbeitszylinder sind vorteilhafterweise an einem Maschinengestell fixiert. Auf das Arbeitselement insbesondere in Spindellängsrichtung wirkende Kräfte, können mit dieser Anordnung im Wesentlichen von dem Arbeitszylinder gestützt werden, wodurch der Spindeltrieb entlastet ist.

Zum einfachen Aufbringen der Vorspannkraft auf die Spindelaufnahme kann der Betätigungszylinderraum an einen vorgespannten Druckmittelspeicher angeschlossen sein, wobei der Druckmittelspeicher zum Betätigungszylinderraum auf- und zusteuerbar ist. Zum Druckmittelausgleich des Arbeitszylinderraums kann dieser ebenfalls mit dem Druckmittelspeicher verbunden sein, wobei auch diese Verbindung auf- und zusteuerbar ist.

Für eine vorrichtungstechnisch äußerst einfache Kraftübersetzung ist der Betätigungszylinderraum über eine Arbeitsleitung mit dem Druckmittelspeicher verbunden, wobei in der Arbeitsleitung ein in Druckmittelströmungsrichtung zum Druckmittelspeicher schließendes Rückschlagventil angeordnet ist. Zwischen diesem und dem Betätigungszylinderraum zweigt eine Druckleitung zum Arbeitszylinderraum ab. Diese ist durch ein elektrisch oder hydraulisch betätigbares erstes Wegeventil aufsteuerbar oder über Verbindungsleitung mit dem Druckmittelspeicher verbindbar. Im Druckmittelströmungspfad zwischen dem ersten Wegeventil und dem Arbeitszylinderraum ist ein in Druckmittelströmungsrichtung hin zum ersten Wegeventil schließendes und über eine Feder vorgespanntes weiteres Rückschlagventil angeordnet. Zwischen dem federvorgespannten Rückschlagventil und dem Arbeitszylinderraum zweigt weiter eine Verbindungsleitung zum Druckmittelspeicher ab, in der ein zweites Wegeventil zum Auf- und Zusteuern dieser Druckmittelverbindung angeordnet ist. In der Druckleitung ist ein hin zur Arbeitsleitung schließendes Rückschlagventil zwischen dem Wegeventil und einer Abzweigungsstelle der Druckleitung von der Arbeitsleitung.

Mit Vorteil ist ein zweiter vom Arbeitskolben begrenzter Arbeitszylinderraum des Arbeitszylinders an die Verbindungsleitung zwischen dem Druckmittelspeicher und dem zweiten Wegeventil angeschlossen.

Bevorzugter Weise ist das zweite Wegeventil ein kostengünstiges und einfach aufgebautes Sitzventil mit einem Stufenkolben. Dieser ist in Öffnungsrichtung über eine Ringfläche von dem Druck in dem zweiten Arbeitszylinderraum bzw. im Druckmittelspeicher und über eine kleine Stirnfläche vom Druck im ersten Arbeitszylinderraum und in Schließrichtung über eine große Stirnfläche vom Druck in der Verbindungsleitung zwischen dem federvorgespannten Rückschlagventil und dem ersten Wegeventil und von einer Federkraft einer Ventilfeder beaufschlagt.

Der Arbeitszylinder ist vorzugsweise ein Gleichgangzylinder, wobei eine den zweiten Arbeitszylinderraum durchsetzende Kolbenstange mit dem Arbeitselement verbunden ist.

Der Arbeits- und Betätigungszylinder sind einfach etwa parallel zum Spindeltrieb angeordnet.

Bei einer weiteren vorteilhaften Ausführungsform der Erfindung sind die den zweiten Arbeitszylinderraum durchsetzende Kolbenstange, eine den ersten Arbeitszylinderraum durchsetzende Kolbenstange und der Arbeitskolben des Arbeitszylinders hohl ausgebildet. Eine Spindel des Spindeltriebs ist dann in den hohlen Bauteilen des Arbeitszylinders angeordnet, wobei eine Längsachse des Arbeitszylinders etwa koaxial zu einer Längsachse der Spindel verläuft, und wobei eine auf der Spindel geführte Spindelmutter an einer der Kolbenstangen fixiert ist. Eine derartige Ausgestaltung ist äußerst bauraumsparend.

Der Spindeltrieb kann eine kostengünstige Kugelrollspindel mit einer zugeordneten und mit dem Arbeitselement verbundenen Spindelmutter sein.

Der Spindeltrieb ist beispielsweise von einem üblichen weg-geregelten Servomotor antreibbar. Durch die Wegregelung ist der Stellweg des Arbeitselements erfassbar, wodurch beispielsweise der Umschaltzeitpunkt zwischen Eil- und Arbeitsgang erfassbar ist.

Zum Betätigen des ersten Wegeventils ist dieses beispielsweise über ein durch den Druck im Betätigungszylinderraum betätigbares Druckzuschaltventil steuerbar.

Sonstige vorteilhafte Weiterbildungen der Erfindung sind Gegenstand weiterer Unteransprüche.

Im Folgenden wird ein bevorzugtes Ausführungsbeispiel der Erfindung anhand schematischer Zeichnungen näher erläutert. Es zeigen:
Figur 1 in einer schematischen Darstellung eine Antriebsvorrichtung in einer ersten Arbeitsposition gemäß einem Ausführungsbeispiel; und
Figur 2 in einer schematischen Darstellung die Antriebsvorrichtung in einer zweiten Arbeitsposition.

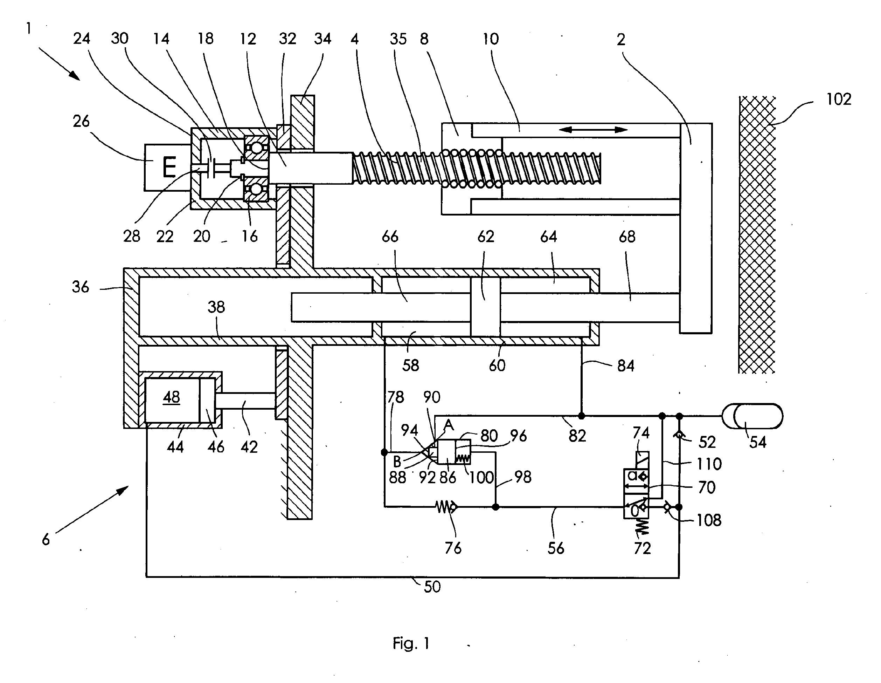

Figur 1 zeigt in einer schematischen Darstellung eine erfindungsgemäße Antriebsvorrichtung 1 gemäß einem Ausführungsbeispiel für ein Werkzeug, beispielsweise einer nicht näher dargestellten Zweiplatten-Spritzgießmaschine. Das Werkzeug ist hierbei an einem Arbeitselement 2 der Antriebsvorrichtung befestigt. Dieses ist von der Antriebsvorrichtung in einem Eil- und einem Arbeitsgang verfahrbar, wobei im Eilgang das Arbeitselement 2 unmittelbar von einer Kugelrollspindel 4 bzw. einer Spindel 4 und im Arbeitsgang mittelbar von der Spindel 4 über einen Kraftübersetzer 6 verstellt ist. Der Eilgang dient zum schnellen Verfahren des Arbeitselements 2 und der Arbeitsgang zum Beaufschlagen des Arbeitselements 2 mit einer hohen Kraft.

Der Spindel 4 ist eine Spindelmutter 8 zugeordnet, die über ein Rohrelement 10 mit dem Arbeitselement 2 verbunden ist. Das Rohrelement 10 ist etwa koaxial zu einer Spindellängsachse angeordnet, womit ein Eintauchen der Spindel 4 in das Rohrelement 10 ermöglicht ist.

Mit einem in der Figur 1 linken Endabschnitt 12 der Spindel 4 ist diese in einer Spindelaufnahme 14 drehbar gelagert. Zur Lagerung ist ein Wälzlager 16 vorgesehen, das anliegend an eine Ringfläche einer Lagerstufe 18 des Endabschnitts 12 und mit einem Lagerring 20 in Spindellängsrichtung an der Spindel 4 gehaltert ist. Die Spindelaufnahme 14 hat ein topfförmiges Gehäuse 22 mit einer von der Spindelmutter 8 weg weisenden Gehäusestirnseite 24 an der ein Spindelantrieb 26, insbesondere ein Servomotor, befestigt ist und mit einer Antriebswelle 28 die Gehäusestirnseite 24 durchsetzt. Das Wälzlager 16 ist innerhalb des topfförmigen Gehäuses 22 fixiert.

Die Antriebswelle 28 ist über eine im Gehäuse 22 angeordnete Kupplung 30 an die Spindel 4 ankuppelbar. An der der Gehäusestirnseite 24 abgewandten Seite des Gehäuses 22 ist dieses mit einer von der Spindel 4 durchsetzten Hubplatte 32 verschlossen, die sich etwa senkrecht zur Spindellängsachse erstreckt. Die Hubplatte 32 ist zusammen mit der Spindelaufnahme 14 und somit mit der Spindel 4 in Spindellängsrichtung verschiebbar, wobei die Verschiebung durch eine zwischen der Hubplatte 32 und der Spindelmutter 8 angeordnete Anschlagplatte 34 eines Maschinengestells 36 begrenzt ist. Die Hubplatte 32 und die Spindelmutter 8 sind gegenüber der Anschlagplatte 34 verdrehgesichert. Die Verdrehsicherung erfolgt beispielsweise durch einen oder mehrerer nicht dargestellter Bolzen, die in der Anschlagplatte 34 befestigt sind und zur einen Seite die Spindelmutter 8 und zur Anderen Seite die Hubplatte 32 durchdringen.

Die Hubplatte 32 umgreift in der Figur 1 eine sich etwa parallel zur Spindellängsachse erstreckende Längsstrebe 38 des Maschinengestells 36. Des Weiteren ist die Hubplatte 32 mit einer Kolbenstange 42 eines in einem Betätigungszylinder 44 geführten Betätigungskolbens 46 verbunden und wird durch den Betätigungskolben 46 gegen die Anschlagplatte 34 mit einer etwa in die Spindellängsrichtung weisenden Vorspannkraft vorgespannt. Der Betätigungszylinder 44 ist an dem Maschinengestell 36 fixiert und erstreckt sicht etwa parallel zur Spindellängsachse. Ausgebildet ist der Betätigungszylinder 44 als einfach wirkender Druckzylinder, wobei ein Betätigungszylinderraum 48 von dem Betätigungskolben 46 begrenzt ist und der Betätigungskolben 46 über den Betätigungszylinderraum 48 mit Druck eines Druckmittels beaufschlagbar ist.

Der Betätigungszylinderraum 48 ist an eine Arbeitsleitung 50 angeschlossen, die über ein Rückschlagventil 52 mit einem Druckmittelspeicher bzw. Hydrospeicher 54 verbunden ist. Das Rückschlagventil 52 ist in Druckmittelströmungsrichtung hin zum Hydrospeicher 54 geschlossen. Zwischen dem Rückschlagventil 52 und dem Betätigungszylinderraum 48 zweigt eine Druckleitung 56 ab, die an einen ersten Arbeitszylinderraum 58 eines Arbeitszylinders 60 angeschlossen ist. In der Druckleitung 56 ist ein weiter unten in der Beschreibung genauer erläutertes Rückschlagventil 108 angeordnet. Die beiden Zylinder 44, 60 dienen als Kraftübersetzer, was nachstehend in dieser Beschreibung genauer erläutert wird.

Ein in dem Arbeitszylinder 60 geführter Arbeitskolben 62 grenzt den ersten, in der Figur 1 linken Arbeitszylinderraum 58 von einem zweiten, rechten Arbeitszylinderraum 64 ab. Bei dem Arbeitszylinder 60 handelt es sich um einen Gleichgangzylinder mit einer beidseitigen Kolbenstange 66, 68, wobei die in der Figur 1 rechte Kolbenstange 68 mit dem Arbeitselement 2 verbunden ist. Der Arbeitszylinder 60 ist etwa im Parallelabstand zur Spindel 4 und etwa koaxial zur Längsstrebe 38 des Maschinengestells 36 angeordnet, und ist mit dem Maschinengestell 36 fest verbunden.

Die Druckmittelverbindung der Druckleitung 56 ist über ein elektromagnetisch betätigbares 3/2-Wegeventil 70 bzw. Wegesitzventil steuerbar. Der Ventilschieber des Wegeventils 70 ist mit einer Ventilfeder 72 in eine Öffnungsstellung 0 vorgespannt und über ein Betätigungselement 74 in eine Schließposition a schaltbar. In der Öffnungsstellung 0 ist die Druckleitung 56 über eine Verbindungsleitung 110 mit dem Hydrospeicher 54 in Druckmittelverbindung und die Druckmittelverbindung der Arbeitsleitung 56 zur Arbeitsleitung 50 gesperrt, während in der Schließposition a die Druckleitung 56 mit der Arbeitsleitung 50 verbunden ist und die Druckmittelverbindung zwischen der Verbindungsleitung 110 und der Arbeitsleitung 56 gesperrt ist. Im Druckmittelströmungspfad zwischen dem Wegeventil 70 und der Arbeitsleitung 50 ist ein in Strömungsrichtung hin zur Arbeitsleitung 50 schließendes Rückschlagventil 108 angeordnet.

Zwischen dem Wegeventil 70 und dem Arbeitszylinderraum 58 ist in der Druckmittelleitung 56 ein federvorgespanntes Rückschlagventil 76 angeordnet, dass in Druckmittelströmungsrichtung hin zum Wegeventil 70 geschlossen ist.

Zwischen dem Rückschlagventil 76 und dem Arbeitszylinderraum 58 zweigt von der Druckleitung 56 eine Anschlussleitung 78 ab, die an einen Druckanschluss A eines 2/2-Wegeventils 80 angeschlossen ist. An einem zweiten Druckanschluss B des Wegeventils 80 ist eine Verbindungsleitung 82 angeschlossen, die mit der Arbeitsleitung 50 zwischen dem Rückschlagventil 52 und dem Hydrospeicher 54 verbunden ist und über eine Zylinderleitung 84 mit dem zweiten Arbeitszylinderraum 64 in Druckmittelverbindung steht. An die Verbindungsleitung 82 ist die Verbindungsleitung 110 zum Wegeventil 70 angeschlossen.

Das zweite Wegeventil 80 ist als Sitzventil mit einem Stufenkolben 86 ausgebildet, wobei eine radial zurückgestufte Stufe 88 des Stufenkolbens 86 einem Ventilsitz 90 zugeordnet ist. Der Stufenkolben 86 ist in Öffnungsrichtung über eine Ringstirnfläche 92 mit Druck aus der Verbindungsleitung 82 und über eine kleine an der Stufe 88 ausgebildete Stirnfläche 94 mit Druck aus der Anschlussleitung 78 und in Schließrichtung über eine große Stirnfläche 96 mit Druck aus der Druckleitung 56, der über eine Zwischenleitung 98 zwischen dem ersten Wegeventil 70 und dem federvorgespannten Rückschlagventil 76 abgegriffen ist, beaufschlagbar. Des Weiteren wird der Stufenkolben 86 mit einer Federkraft einer Ventilfeder 100 in Schließrichtung beaufschlagt. In geschlossenem Zustand des zweiten Wegeventils 80 ist die Druckmittelverbindung zwischen der Anschlussleitung 78 und der Verbindungsleitung 82 zugesteuert.

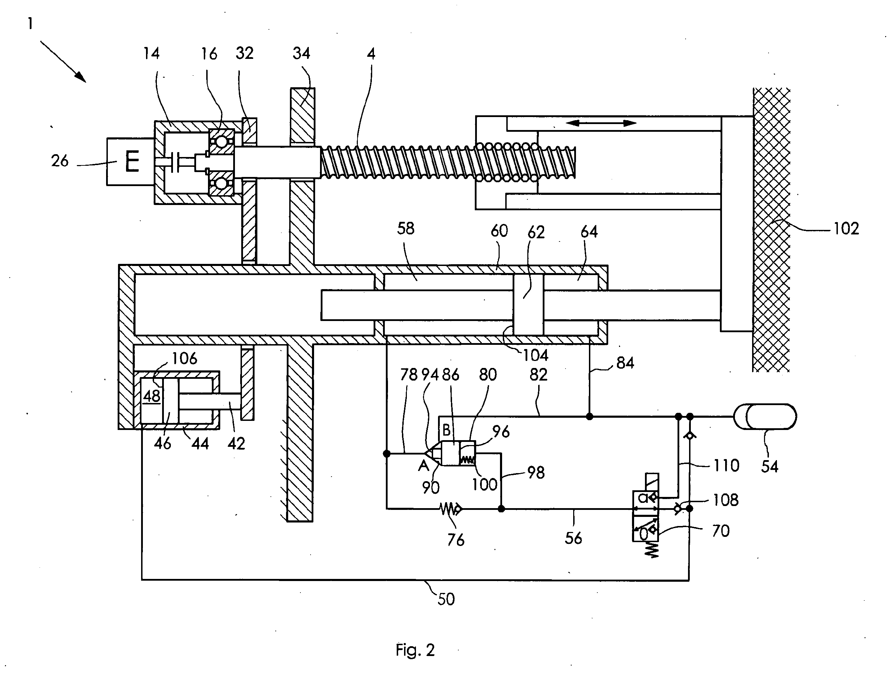

Im Folgenden wird die Funktionsweise der Antriebsvorrichtung anhand der Figuren 1 und 2 erläutert. In Figur 1 ist im Wesentlichen die Antriebsvorrichtung 1 im Einsatz mit dem Eilgang und in Figur 2 mit dem Arbeitsgang gezeigt.

Im Eilgang in Figur 1 ist die Hubplatte 32 über den Betätigungszylinder 44 mit einer Vorspannkraft gegen den Anschlag 34 gespannt. Der Ventilschieber des ersten Wegeventils 70 ist hierbei stromlos durch die Feder 72 in der Öffnungsstellung 0 vorgespannt. Die auf die Hubplatte 32 wirkende Vorspannkraft wird hydraulisch als Vorspanndruck über den beispielsweise mit 2 bis 3 bar vorgespannten Hydrospeicher 54, das Rückschlagventil 52, die Arbeitsleitung 50 und dem Betätigungszylinderraum 48 auf den Betätigungskolben 48 beaufschlagt. Der Vorspanndruck wirkt dann über den Betätigungskolben 48 und die Kolbenstange 42 auf die Hubplatte 32. Bei einer durch die Antriebseinheit 26 angetriebenen Spindel 4 ist dann das Arbeitselement 2 über die Spindelmutter 8 und das Rohrelement 10 mit hoher Geschwindigkeit in Spindellängsrichtung verfahrbar. Die Kräfte, die beim Bewegen des Arbeitselements 2 auf die Hubplatte 32 wirken, werden in Richtung des Widerstands 102 von der Anschlagplatte 34 aufgenommen. In der entgegengesetzten Richtung werden Bewegungskräfte vom Betätigungszylinder 44 dadurch aufgenommen, dass sich im Betätigungszylinderraum 48 ein der Bewegungskraft entsprechender Druck aufbaut, da die die Arbeitsleitung 50 geschlossen ist.

Im Eilgang wird durch Verschieben des Arbeitselements 2 in Richtung der Spindellängsachse der Arbeitskolben 62 über die rechte Kolbenstange 68 mitbewegt. Das zweite Wegeventil 80 ist dabei geöffnet, wobei die beiden Arbeitszylinderräume 58, 64 miteinander in Druckmittelverbindung stehen. Bei einer Hubbewegung des Arbeitskolbens 62 wird dann Druckmittel aus einem der Arbeitszylinderräume 58 oder 64 verdrängt und von dem entsprechend anderen Arbeitszylinderraum 64 bzw. 58 angesaugt.

Ein Widerstand 102 ist in Spindellängsrichtung in Richtung weg von der Spindelaufnahme 14 in Figur 1 und 2 schematisch dargestellt. Hierbei handelt es sich beispielsweise um ein zu verschließendes Werkzeug einer eingangs erläuterten Spritzgießmaschine.

Trifft gemäß Figur 2 das Arbeitselement 2 auf den Widerstand 102, dann wird die Antriebsvorrichtung 1 im Arbeitsgang betrieben. Der Hub, bei dem das Arbeitselement 2 an dem Widerstand 102 anliegt, kann beispielsweise über den weg-geregelten Servomotor der Antriebseinheit 26 bestimmt werden. Bei Erreichen dieses Hubes und damit beim Anliegen des Arbeitselements 2 an den Widerstand 102 wird der Ventilschieber des zweiten Wegeventils 70 in die Schließstellung a geschaltet.

In der Figur 2 schraubt sich dann die von der Antriebseinheit 26 weiter angetriebene Spindel 4 aus der über das Rohrelement 10 und das Arbeitselement 2 gehalterten Spindelmutter 8 in Richtung weg von dem Widerstand 102, wodurch die Hubplatte 32 über das Wälzlager 16 und die Spindelaufnahme 14 weg von der Anschlagplatte 34 bewegt wird. Hierdurch wird der Betätigungskolben 46 über die Kolbenstange 42 von der Hubplatte 32 mit einer Betätigungskraft von der Antriebseinheit 26 in Richtung eines sich verkleinernden Betätigungszylinderraums 48 bewegt, wodurch Druckmittel aus dem Betätigungszylinderraum 48 mit einem Betätigungsdruck verdrängt wird. Das Druckmittel gelangt dann über die Arbeitsleitung 50, die Druckleitung 56, das Rückschlagventil 108, das Wegeventil 70 und das sich öffnende federvorgespannte Rückschlagventil 76 in den ersten und in der Figur 2 linken Arbeitszylinderraum 58 des Arbeitszylinders 60. Der Stufenkolben 86 des zweiten Wegeventils 80 wird über die von der Druckleitung 56 abzweigende Zwischenleitung 98 und über die große Stirnfläche 96 mit dem Betätigungsdruck beaufschlagt, wodurch der Stufenkolben 86 mit der Stufe 88 an dem Ventilsitz 90 anliegt und die Druckmittelverbindung zwischen der Anschlussleitung 78 und der Verbindungsleitung 82 verschließt. Der Arbeitskolben 62 wird somit mit dem Betätigungsdruck über den ersten Arbeitszylinderraum 58 beaufschlagt. Eine den Arbeitszylinderraum 58 begrenzende Arbeitswirkfläche 104 bzw. Ringfläche des Arbeitskolbens 62 ist größer als ein den Betätigungszylinderraum 48 begrenzende Betätigungswirkfläche 106 des Betätigungskolbens 46, womit der Arbeitskolben 62 kraftübersetzt eine der Betätigungskraft übersteigende Arbeitskraft über die Kolbenstange 68 auf das Arbeitselement 2 beaufschlagt. Somit ist die von der Antriebseinheit 26 über die Spindel 4 auf den Betätigungskolben 46 beaufschlagte Betätigungskraft hydraulisch als Arbeitskraft kraftübersetzt, entsprechend eines Flächenverhältnisses der beiden Wirkflächen 104, 106, auf den Arbeitskolben 62 beaufschlagbar. Je größer die Hubbewegung des Betätigungskolbens 46 ist, desto größer ist auch die Betätigungskraft und somit die Arbeitskraft, falls die Position des Arbeitselements im Wesentlichen gleich bleibt. Das Drehmoment der Antriebseinheit 26 wird somit über die Spindel 4 in die Spindellängsrichtung wirkende Betätigungskraft umgewandelt.

Das Druckmittel in dem zweiten Arbeitszylinderraum 64 ist über die Zylinderleitung 84 und die Verbindungsleitung 82 zum Hydrospeicher 54 verdrängbar.

Zum Halten der Arbeitskraft verbleibt das erste Wegeventil 70 in der Schließstellung a.

Nach Erreichen der gewünschten Arbeitskraft durch den Arbeitszylinder 60 kann der Spindeltrieb 26 abgeschaltet werden, da aufgrund des Rückschlagventils 108 der Druck in den Leitungen 56, 98 im Wesentlichen erhalten bleibt, das Wegeventil 80 geschlossen bleibt und somit der Druck in dem Arbeitszylinderraum 58 erhalten bleibt.

Der Spindelantrieb 26 bewegt nun die Hubplatte 32 über Spindel 4 zur Anschlagplatte 34, während die Kraftwirkung des Arbeitszylinders 60 fortbesteht. Bei dieser Bewegung vergrößert sich der Betätigungszylinderraum 48, wodurch der Druck im Betätigungszylinderraum 48 und in der Arbeitsleitung 50 abgebaut werden, bis dieser unterhalb des Drucks im Hydrospeicher 54 sinkt, wodurch Druckmittel vom Hydrospeicher 54 über das Rückschlagventil 52 zur Arbeitsleitung 50 in den Betätigungszylinderraum 48 strömt.

Zum Abbau des auf das Arbeitselement 2 wirkenden Arbeitsdrucks, wird das Wegeventil 70 in die Öffnungsstellung 0 geschaltet. Dadurch baut sich der Druck, der auf die große Stirnfläche 96 des Stufenkolbens 86 des Wegeventils 80 wirkt, über die Leitungen 98, 56 und 110 zum Hydrospeicher 56 ab. Der Druck im Arbeitszylinderraum 58 des Arbeitszylinders 60, der über die Leitung 78 auf die kleine Stirnfläche 94 des Stufenkolbens 86 wirkt, initiiert daraufhin, dass sich der Stufenkolben 86 gegen die Federkraft der Feder 100 in Öffnungsrichtung bewegt und die Leitungen 78 und 82 verbindet. Dadurch werden die Arbeitszylinderräume 58, 64 des Arbeitszylinders 60 miteinander verbunden und der Druck im Arbeitszylinder 58 wird zum Hydrospeicher 54 abgebaut. Die Kraftwirkung des Arbeitszylinders 60 auf den Widerstand 102 ist dadurch aufgehoben. Das Arbeitselement 2 ist wieder über die Spindel 4 im Eilgang weg vom Widerstand 102 bewegbar, was in der Figur 1 gezeigt ist.

Im Folgenden werden weitere vorteilhafte Ausbildungsformen der Antriebsvorrichtung 1 aus den Figuren 1 und 2 erläutert, die nicht in den Figuren dargestellt sind, allerdings werden für Bezeichnungen der Bauteile zur besseren Erläuterung die Bezugszeichen aus den Figuren 1 und 2 verwendet.

Aus Gründen des Bauraums und des vorrichtungstechnischen Aufwands ist die Spindel 4 im Inneren des Arbeitszylinders 60 anordenbar, wodurch das Rohrelement 10 und das Arbeitselement 2 nicht mehr notwendig sind. Die Kolbenstangen 66, 68 und der Arbeitskolben 62 sind hierbei hohl ausgeführt. Die Spindelmutter 8 ist dann entweder an der Kolbenstange 66 oder 68 oder an beiden befestigt. Trifft letzteres zu, so erfüllt die Spindelmutter 8 gleichzeitig die Aufgabe des Arbeitskolbens 62 und ersetzt diesen. Am einfachsten ist die Antriebsaufgabe gelöst, wenn die Spindelmutter 8 als Kolbenstange ausgebildet ist und so den Arbeitskolben 62, die Kolbenstangen 66 und 68 ersetzt. Der Kraftübersetzer 6 kann auch so angeordnet werden, dass dessen Mittelachse mit den Mittelachsen von dem Arbeitszylinder 60 und der Spindel 4 etwa deckungsgleich sind.

Offenbart ist die Antriebsvorrichtung mit einem an einer Spindelaufnahme abgestützten Spindeltrieb zur Verstellung eines Arbeitselements. Das Arbeitselement ist beispielsweise eine Schließeinheit für ein Werkzeug wie eine Zweiplattenspritzgießmaschine. Die Spindelaufnahme ist ihrerseits dabei an einem Kraftübersetzer abgestützt, der zwei Hydraulikzylinder aufweist. Über eine Kolbenstange des einen Hydraulikzylinders ist die Spindelaufnahme gegen einen Anschlag vorspannbar, wobei bei einer auf das Arbeitselement entgegen einer Vorspannkraft wirkenden Widerstandskraft, die größer als die Vorspannkraft ist, die Spindelaufnahme gegen die Vorspannkraft bewegbar ist. Bei dieser Bewegung entsteht eine Kraft, die von der Spindelaufnahme über den Kraftübersetzer mit einer entsprechend dem Übersetzungsverhältnis größeren Kraft auf das Arbeitselement beaufschlagt wird.

## Patentansprüche

1. Antriebsvorrichtung mit einem an einer Spindelaufnahme (14) abgestützten Spindeltrieb (4, 8, 26) zur Verstellung eines Arbeitselements (2), wobei die Spindelaufnahme (14) ihrerseits an einem Kraftübersetzer (44, 60) abgestützt und von diesem mit einer Vorspannkraft gegen einen Anschlag (34) vorspannbar ist, wobei bei einer auf das Arbeitselement (2) entgegen der Vorspannkraft wirkenden Widerstandskraft, die größer als die Vorspannkraft ist, die Spindelaufnahme (14) gegen die Vorspannkraft bewegbar ist, wobei die bei dieser Bewegung entstehende Kraft über den Kraftübersetzer (44, 60) mit einer entsprechend dem Übersetzungsverhältnis größeren Kraft auf das Arbeitselement (2) beaufschlagt ist.

2. Antriebsvorrichtung nach Anspruch 1, wobei der Kraftübersetzer (44, 60) einen hydraulischen Betätiguhgs- und Arbeitszylinder (44, 60) hat.

3. Antriebsvorrichtung nach Anspruch 2, wobei ein im Betätigungszylinder (44) geführter und mit der Spindelaufnahme (14) verbundener Betätigungskolben (46) einen Betätigungszylinderraum (48) begrenzt, der in Druckmittelverbindung mit einem Arbeitszylinderraum (58) des Arbeitszylinders (60) steht, wobei der Arbeitszylinderraum (58) von einem im Arbeitszylinder (60) geführten und mit dem Arbeitselement (2) verbundenen Arbeitskolben (62) begrenzt ist.

4. Antriebsvorrichtung nach Anspruch 3, wobei ein Druckmittelspeicher (54) jeweils zum Betätigungszylinderraum (48) und zum Arbeitszylinderraum (58) auf- und zusteuerbar ist.

5. Antriebsvorrichtung nach Anspruch 4, wobei der Betätigungszylinderraum (48) über eine Arbeitsleitung (50) mit dem Druckmittelspeicher (54) verbunden ist, wobei in der Arbeitsleitung (50) ein in Druckmittelströmungsrichtung zum Druckmittelspeicher (54) schließendes Rückschlagventil (52) angeordnet ist, und wobei zwischen dem Rückschlagventil (52) und dem Betätigungszylinderraum (48) eine Druckleitung (56) zum Arbeitszylinderraum (58) abzweigt, die durch ein elektrisch oder hydraulisch betätigbares erstes Wegeventil (70) aufsteuerbar oder über einer Verbindungsleitung (110) mit dem Druckmittelspeicher (54) verbindbar ist, und wobei im Druckmittelströmungspfad zwischen dem ersten Wegeventil (70) und dem Arbeitszylinderraum (58) ein in Druckmittelströmungsrichturig hin zum Wegeventil schließendes und über eine Feder vorgespanntes Rückschlagventil (76) angeordnet ist, und zwischen dem federvorgespannten Rückschlagventil (76) und dem Arbeitszylinderraum (58) eine Verbindungsleitung (78, 82) zum Druckmittelspeicher (54) abzweigt, in dem ein zweites Wegeventil (80) zum Auf- und Zusteuern der Druckmittelverbindung angeordnet ist, und wobei ein hin zur Arbeitsleitung (50) schließendes Rückschlagventil (108) in der Druckleitung (56) zwischen dem Wegeventil (70) und einer Abzweigung von der Arbeitsleitung (5) eingebracht ist.

6. Antriebsvorrichtung nach Anspruch 5, wobei ein zweiter vom Arbeitskolben (62) begrenzter Arbeitszylinderraum (64) des Arbeitszylinders (60) an die Verbindungsleitung (82) angeschlossen ist.

7. Antriebsvorrichtung nach Anspruch 6, wobei das zweite Wegeventil (80) ein Sitzventil mit einem Stufenkolben (86) ist, der in Öffnungsrichtung in eine Ringstirnfläche (92) von dem Druck in dem zweiten Arbeitszylinderraum (64) und über eine kleine Stirnfläche (94) vom Druck im ersten Arbeitszylinderraum (58) und in Schließrichtung über eine große Stirnfläche (96) vom Druck in der Verbindungsleitung (56) zwischen dem federvorgespannten Rückschlagventil (76) und dem ersten Wegeventil (70) und von einer Federkraft einer Ventilfeder (100) beaufschlagbar ist.

8. Antriebsvorrichtung nach einem der Ansprüche 2 bis 7, wobei der Arbeitszylinder (60) ein Gleichgangzylinder ist, und wobei eine den zweiten Arbeitszylinderraum (64) durchsetzende Kolbenstange (68) mit dem Arbeitselement (2) verbunden ist.

9. Antriebsvorrichtung nach einem der Ansprüche 2 bis 8, wobei der Arbeitszylinder (60) und der Betätigungszylinder (44) etwa parallel zum Spindeltrieb (4, 8, 26) angeordnet sind.

10. Antriebsvorrichtung nach Anspruch 8, wobei die den zweiten Arbeitszylinderraum (64) durchsetzende Kolbenstange (68), eine den ersten Arbeitszylinderraum (58) durchsetzende Kolbenstange (66) und der Arbeitskolben (62) des Arbeitszylinders (60) hohl ausgebildet sind, und eine Spindel (4) des Spindeltriebs (4, 8, 26) in den hohlen Bauteilen (62, 66, 68) des Arbeitszylinders (60) angeordnet ist, wobei eine Längsachse des Arbeitszylinders (60) etwa koaxial zu einer Längsachse der Spindel (4) verläuft, und wobei eine auf der Spindel (4) geführte Spindelmutter (8) an einer der Kolbenstangen (66 oder 68) fixiert ist.

11. Antriebsvorrichtung nach einem der vorhergehenden Ansprüche, wobei der Spindeltrieb (4, 8, 26) eine Kugelrollspindel (4), eine Planetenrollenspindel oder ein anderes Bewegungsgewinde mit einer zugeordneten und mit dem Arbeitselement (2) verbundene Spindelmutter (8) aufweist.

12. Antriebsvorrichtung nach einem der vorhergehenden Ansprüche, wobei der Spindeltrieb (4, 8, 26) von einem weg-geregelten Servomotor (26) angetrieben ist.

13. Antriebsvorrichtung nach einem der Ansprüche 5 bis 12, wobei das erste Wegeventil (70) über ein durch den Druck im Betätigungszylinderraum (48) betätigbares Druckzuschaltventil betätigbar ist.
